# FASCICULE DE BREVET EUROPEEN

(11) **EP 1 870 789 B1**
(45) Date de publication et mention de la délivrance du brevet: **23.09.2009**
(21) Numéro de dépôt: 07011858.3
(22) Date de dépôt: 18.06.2007
(51) Int. Cl.: G05D 1/06, G01C 21/00

(54) **Système de détection d'obstacles au voisinage d'un point de poser**
System zur Erfassung von Hindernissen in der Umgebung eines Landungspunktes
System for detecting obstacles in the proximity of a landing point

(30) Priorité: 20.06.2006 FR 0605480
(43) Date de publication de la demande: 26.12.2007
(73) Titulaire: EUROCOPTER, 13725 Marignane Cédex (FR)
(72) Inventeur: Filias, Francois-Xavier, 13410 Lambesc (FR); Sequeira, Jean, 13009 Marseille (FR)
(74) Mandataire: Pouillot, Laurent Pierre Paul

(56) Documents cités:
- EP-A1- 0 652 544
- US-A1- 3 886 306
- US-A1- 6 101 431
- US-B2- 6 650 407

## Description

La présente invention est relative à un système de détection d'obstacles au voisinage d'un point de poser.

Le domaine technique de l'invention est celui de la fabrication d'hélicoptères.

Les accidents résultant d'une collision d'un aéronef avec un obstacle non répertorié et non détecté, sont fréquents et coûteux.

Un objectif de l'invention est de proposer un procédé et un dispositif de détection et signalisation au pilote d'un aéronef de la présence d'obstacles tels que des câbles électriques aériens (suspendus) autour d'une zone de poser, à l'aide d'un OWS (« Obstacle Warning System »), d'un calculateur d'affichage cartographique (Digital Map) et d'un système de gestion de vol FMS (« Flight Management System ») associé à des équipements de navigation.

Un objectif de l'invention, est de permettre à un giravion piloté par un humain ou par un calculateur de se poser puis de décoller de façon sécurisée.

Pour remplir diverses missions (civiles ou militaires), le pilote d'un aéronef peut être amené à se poser puis à décoller dans des conditions d'urgence.

Pour le redécollage à partir d'un point de poser, un pilote peut oublier l'emplacement précis de câbles qu'il avait précédemment repérés.

Afin de repérer visuellement des obstacles tels que des câbles au voisinage d'un point de poser quelconque à la surface du globe terrestre, certains pilotes humains effectuent avant l'atterrissage de nombreux passages au dessus du point de poser, ce qui occasionne une perte de temps préjudiciable, notamment pour une mission d'évacuation de blessé(s) ou de soldats.

Un risque de collision avec un câble peut également résulter du fait que le câble a été mal repéré (non vu) ou mal localisé (problème d'appréciation des distances).

Un objectif de la présente invention est de sécuriser une aire de poser à l'aide d'un télémètre (de préférence laser à balayage) permettant de détecter les câbles suspendus et d'un système d'affichage cartographique lié aux équipements de navigation permettant de les localiser avec précision.

L'utilisation de télémètres (radar ou laser) embarqués pour détecter les câbles présente à ce jour des lacunes et inconvénients ; la précision d'un télémètre radar n'est pas suffisante pour localiser dans l'espace un câble aérien.

Un télémètre laser ne permet pas de détecter un câble dont l'axe longitudinal forme, avec l'axe de visée du télémètre, un angle (incidence) de faible valeur ; le télémètre ne permet pas non plus de détecter un câble situé au niveau de l'hélicoptère ou au dessus ; en conséquence, lorsqu'un hélicoptère décolle, tant qu'il n'a pas atteint une hauteur suffisante pour que le télémètre permette de détecter les câbles situés dans son « champ de vision », l'hélicoptère est vulnérable à tous les câbles proches non repérés ou oubliés par le pilote.

Il existe des systèmes cartographiques avec une base de données référençant les câbles les plus importants, mais ces bases ne sont pas suffisamment complètes, précises, et tenues à jour pour référencer tous les câbles.

Les calculateurs d'affichage cartographique existants permettent, à partir d'une base de données « terrain », d'afficher dans certaines zones du globe terrestre les obstacles potentiellement dangereux avec un fond de carte cohérent avec la position présente d'un aéronef, mais ces systèmes souffrent des lacunes susmentionnées des bases de données.

On comprend que la détection d'obstacles à bord d'un aéronef ait fait l'objet de nombreuses recherches et que différents aspects soient décrits dans de nombreux brevets.

Le brevet US-5,621,807 décrit un procédé de reconnaissance d'objets par comparaison des données délivrées par une caméra 3D avec des modèles géométriques prédéterminés.

Plusieurs brevets sont relatifs à la présentation d'informations à l'équipage d'un aéronef.

Le document WO 01/90694 propose deux modes de prise de conscience des dangers représentés par le relief, qui peuvent être choisis par le pilote ; le document US-2004/0059473 concerne l'ajustement du contraste pour l'affichage de données de terrain/reliéf ; le document US-2006/0087452 concerne la synthèse d'images 3D du voisinage d'un point de poser à partir de données préalablement enregistrées et du mouvement d'approche de l'hélicoptère.

Le brevet US-6 101 431 propose d'enregistrer les données de position d'obstacles obtenues par un télémètre embarqué.

Le brevet US-6,216,065 propose de créer une trajectoire d'approche d'un point de poser à partir d'une position de l'aéronef donnée par un récepteur GPS, d'une base de données de terrain et d'obstacles embarquée, et de données cartographiques de terrain et d'obstacles délivrées en « temps réel » par un radar Doppler ou une diode laser embarqué(e); selon ce brevet, les obstacles de la base de données peuvent être comparés à ceux détectés par le capteur temps réel pour modifier la trajectoire d'approche si les obstacles détectés sont différents de ceux enregistrés dans la base.

Différents brevets concernent la détection de câbles : le brevet GB-1 494 561 propose une exploration en spirale ou en cercles par un télémètre laser ; les brevets US-5,296,909, US-5,762,292 et US-6,747,576 décrivent des utilisations d'une transformée de Hough pour détecter les câbles ; le brevet US-6,278,409 propose d'utiliser des onde radio polarisées ; le document US-2004/0178943 propose d'utiliser l'effet Doppler d'échos radar, et le document US-2006/0009887 propose de mesurer un champ électrique statique différentiel.

Malgré l'ampleur et la diversité de ces recherches, il subsiste un besoin important en matière de détection d'obstacles à bord d'aéronefs.

Un objectif de l'invention est de proposer un procédé ou programme de détection d'obstacles et un dispositif ou système programmé pour mettre en oeuvre ce procédé, qui soient améliorés et/ou qui remédient, en partie au moins, aux lacunes ou inconvénients des systèmes de détection connus.

Un objectif de l'invention est de proposer de tels systèmes qui soient mieux adaptés à un atterrissage et à un décollage en un point de poser situé dans une région terrestre pour laquelle on ne dispose pas d'une base de données relatives au relief du terrain et aux obstacles qui soit très précise et exhaustive (parfaitement actualisée).

Selon un aspect de l'invention, il est proposer d'acquérir à bord d'un aéronef des données de mesure télémétrique d'une région terrestre entourant un point de poser candidat, pendant un survol de cette région, d'analyser ces données à bord de l'aéronef pour identifier, positionner et dimensionner des reliefs ou obstacles, d'enregistrer des données relatives aux positions et dimensions des obstacles détectés par télémétrie et, après atterrissage au voisinage du point de poser, d'utiliser ces données enregistrées pour déterminer une trajectoire d'envol.

En d'autres termes, il est proposé un procédé de détection d'obstacles à bord d'un aéronef au voisinage d'un point de poser, comportant les opérations suivantes :
- choisir/déterminer une trajectoire de survol du point de poser par l'aéronef,
- effectuer un survol du point de poser par l'aéronef selon la trajectoire de survol, et enregistrer pendant le survol des signaux/données délivrées par un télémètre embarqué (à bord de l'aéronef) observant une portion d'espace s'étendant sous l'aéronef,
- analyser les données télémétriques pour détecter la présence d'obstacles et déterminer leur position dans un repère terrestre et le cas échéant leurs dimensions, et
- enregistrer des données de position et le cas échéant de dimension des obstacles détectés (dans une mémoire associée à un calculateur de l'aéronef).

Selon des modes préférés de réalisation de l'invention :
- une projection horizontale de la trajectoire de survol comporte deux arcs ou segments se croisant en un point d'intersection proche du point de poser, de sorte que l'aéronef effectue successivement deux survols du point de poser selon deux caps différents, en particulier deux survols seulement ;
- la valeur de l'angle formé par les arcs ou segments au point d'intersection est située dans une plage allant d'environ 40 degrés à environ 140 degrés, notamment dans une plage allant d'environ 75 degrés à environ 105 degrés, cette valeur étant en particulier voisine ou sensiblement égale à 90 degrés ;
- une projection horizontale de la trajectoire de survol comporte une ou plusieurs boucle(s) fermée(s) présentant un point anguleux -ou sommet- voisin du point de poser et correspondant au point d'intersection, laquelle boucle inclut les arcs ou segments ;
- on maintient l'altitude de l'aéronef sensiblement constante pendant le survol selon les arcs/segments ou la boucle ;
- pendant une partie au moins de la trajectoire de survol, on maintient l'altitude de l'aéronef à une valeur voisine de - ou inférieure à - 300 mètres environ, en partie voisine de - ou inférieure à - 100 ou 200 mètres environ ;
- pendant une partie au moins de la trajectoire de survol, on maintient la vitesse de l'aéronef à une valeur de l'ordre de 10 mètres par seconde environ à 50 mètres par seconde environ ;
- on utilise un télémètre dont l'axe de visée forme avec la verticale un angle situé dans une plage allant de zéro degrés environ à 45 degrés environ ;
- on utilise un télémètre présentant un axe de visée dont l'orientation peut être réglable ;
- on utilise une transformée de Hough ou de Radon pour analyser les données télémétriques, afin d'améliorer la détection d'objets filiformes tels que fils, câbles, mats ou poteaux ;
- on affiche sur un dispositif d'affichage, un premier symbole représentatif du point (de poser) ainsi qu'un second symbole représentatif d'un obstacle détecté ne faisant pas partie de la base de données, et de préférence des données cartographiques relatives à une région entourant le point de poser ;
- on délivre des signaux de commande d'organes de manoeuvre de l'aéronef pour faire suivre la trajectoire de survol à l'aéronef.

Notamment lorsque le pilote de l'aéronef est humain, on présente de préférence au pilote, avant et/ou pendant le décollage du point de poser, une carte de la région sur laquelle on incruste des symboles représentatifs des obstacles détectés.

Selon un autre aspect de l'invention, il est proposé de calculer à partir d'une base de données de terrain et/ou d'obstacles embarquée, une trajectoire de survol d'une région, de suivre cette trajectoire pour acquérir par télémétrie des données actualisées et complétées du terrain et des obstacles de la région, avant de s'approcher et d'atterrir en un point de la région.

En d'autres termes, il est proposé un procédé de pilotage d'un aéronef au voisinage d'un point (de poser), dans lequel :
i) - on choisit une trajectoire candidate dont une projection horizontale comporte une boucle fermée présentant un point anguleux - ou sommet - voisin dudit point (de poser);
ii) - on associe à la trajectoire candidate une altitude de sécurité;
iii) - on compare des données relatives au relief (du terrain et d'obstacles) au voisinage dudit point (de poser) qui sont enregistrées dans une mémoire embarquée, à la trajectoire candidate associée à l'altitude de sécurité, pour détecter une éventuelle interférence entre le relief et la trajectoire candidate;
iv) - dans le cas où une telle interférence est détectée, on modifie la trajectoire candidate et/ou l'altitude de sécurité, puis on répète l'opération iii) ; et
v) - dans le cas où aucune interférence n'est détectée, on détecte des obstacles, notamment des obstacles qui ne sont pas enregistrés dans la mémoire -ou base de données- embarquée, par un procédé de détection selon l'invention, en choisissant la trajectoire candidate comme trajectoire de survol.

Selon un mode préféré de réalisation, pour modifier la trajectoire candidate, on effectue au moins une des opérations suivantes :
- augmenter ou diminuer la valeur du rayon/envergure de la boucle selon le relief et/ou les conditions météorologiques, dans le cas où une autre figure de survol avec deux arcs ou segments de trajectoire formant un angle de l'ordre de 90° n'est pas possible de façon sécurisée ;
- augmenter ou diminuer la valeur de l'angle au sommet de la boucle selon le relief rencontré et l'altitude de survol nécessaire, dans le cas où l'on ne peut pas réduire le rayon de survol avec deux arcs ou segments de trajectoire formant un angle de l'ordre de 90° pour des dimensions acceptables ;
- déplacer la trajectoire candidate par une rotation centrée sur un point voisin du point (de poser) si le point de poser n'est plus jugé « possible » (forêt, terrain non praticable, etc...) ;
- modifier la direction de la bissectrice de l'angle au sommet.

Selon un autre aspect de l'invention, un système d'aide à l'atterrissage et au décollage d'un aéronef en un point de poser comporte :
- un afficheur embarqué pour afficher des données cartographiques et des symboles représentatifs d'obstacles,
- une base de données embarquée contenant des données de terrain ou d'obstacles,
- un instrument embarqué de positionnement pour déterminer la position courante de l'aéronef,
- une mémoire embarquée pour enregistrer des données de terrain ou d'obstacles complétant les données de la base de données,
- un télémètre embarqué pour acquérir des données de terrain ou d'obstacles,
- un calculateur relié à l'afficheur, à la base de données, à l'instrument de positionnement, au télémètre et à la mémoire, le calculateur étant arrangé/programmé pour commander le cas échéant le survol du point de poser, analyser les données délivrées par le télémètre pendant le survol et enregistrer les données analysées dans la mémoire, et afficher des données extraites de la base de données et au moins un symbole représentatif d'un obstacle détecté par analyse des données télémétriques.

Selon un autre aspect de l'invention, il est proposé un programme fixé sur un support lisible par un calculateur d'un aéronef pour détecter des obstacles au voisinage d'un point de poser, qui comporte :
- un segment de code pour déterminer une trajectoire de survol du point de poser par l'aéronef,
- un segment de code pour enregistrer pendant le survol des signaux/données délivrées par un télémètre embarqué observant une portion du voisinage du point de poser,
- un segment de code pour analyser les données télémétriques, détecter la présence d'obstacles et déterminer leur position dans un repère terrestre et le cas échéant leurs dimensions, et
- un segment de code pour enregistrer des données de position et le cas échéant de dimension des obstacles détectés dans une mémoire.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.
La figure 1 illustre en vue en plan une trajectoire de survol d'un point de poser et d'atterrissage selon un premier mode de réalisation de l'invention.
La figure 2 illustre en vue en plan une trajectoire de survol d'un point de poser et d'atterrissage selon un second mode de réalisation de l'invention.
La figure 3 illustre en vue en plan une trajectoire de survol d'un point de poser et d'atterrissage selon un troisième mode de réalisation de l'invention.
La figure 4 illustre en vue en plan une trajectoire de survol d'un point de poser et d'atterrissage selon un quatrième mode de réalisation de l'invention.
La figure 5 est une vue similaire à la figure 3 illustrant un obstacle situé au voisinage du point de poser.
La figure 6 est un diagramme illustrant la variation moyenne (à probabilité suffisante de détection) de la portée de détection d'un câble par télémétrie en fonction de l'angle d'incidence de l'axe du faisceau télémétrique par rapport au câble.
La figure 7 illustre schématiquement les principaux composants d'un dispositif ou système embarqué selon l'invention, ainsi que leurs connexions.
Les figures 8 et 9 illustrent deux exemples de visualisation pour un pilote conformément à un mode de réalisation de l'invention.
Les figures 10 et 11 illustrent schématiquement un hélicoptère et le faisceau d'observation d'un télémètre laser à balayage embarqué, pour deux orientations distinctes du télémètre.

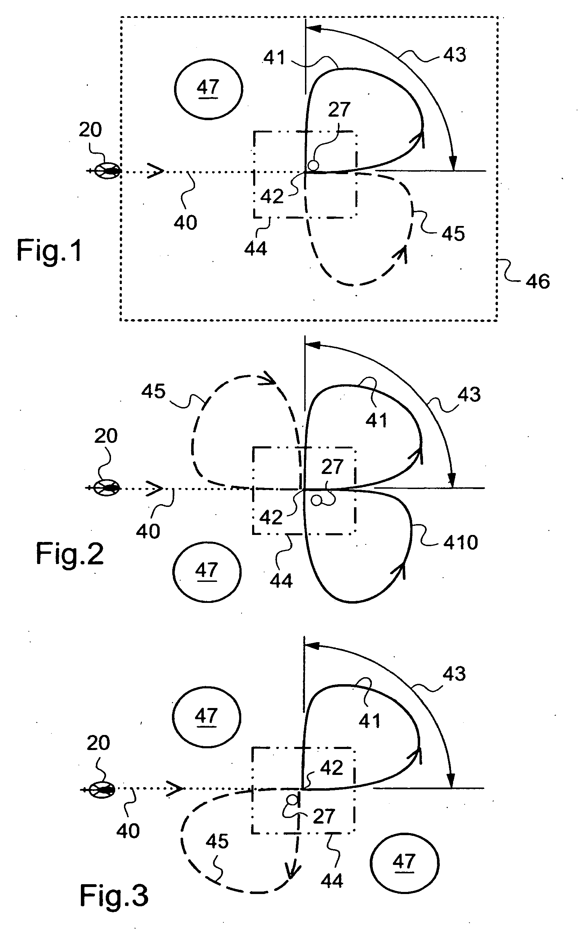

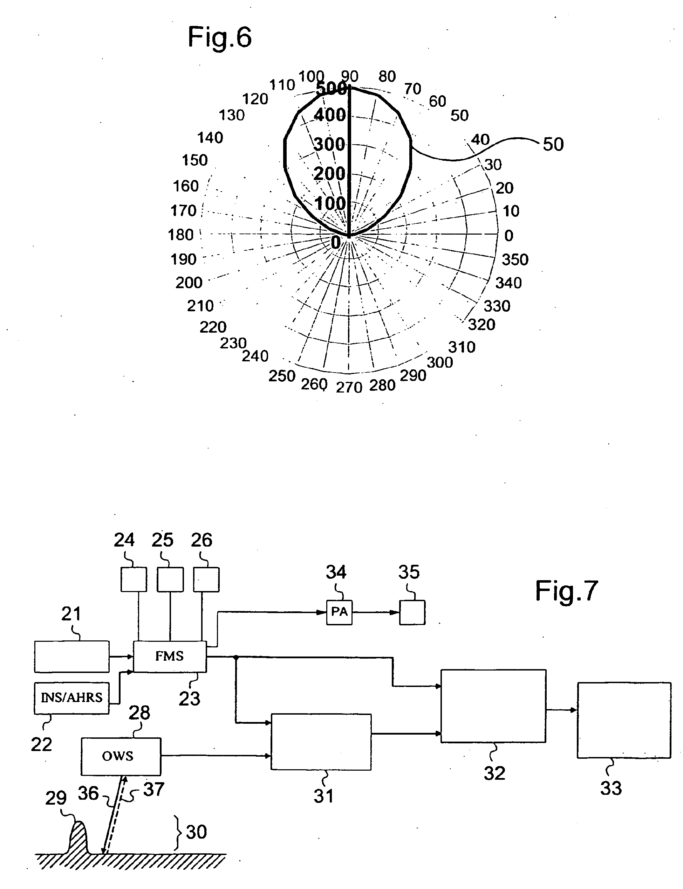

Par référence aux figures 1 et 7 notamment, un hélicoptère 20 est équipé d'un système 21 de positionnement par satellite (GPS ou EGNOS par exemple) et d'une unité 22 -ou centrale- de mesure inertielle (de type INS ou AHRS), ainsi qu'un calculateur 23 de gestion de vol (type FMS) recevant des données de position courante de l'hélicoptère qui sont délivrées par le système 21 et/ou l'unité 22.

Le système embarqué selon l'invention comporte en outre un dispositif 24 d'introduction de données, une base de données 25 de terrain et/ou d'obstacles, et une mémoire 26, qui sont connectés/associés au calculateur 23.

La mémoire 26 contient des données de configuration de trajectoires de survol et d'atterrissage telles que celles illustrées figures 1 à 3.

Le dispositif 24 permet d'introduire dans le calculateur 23 des données relatives à la position d'un point de poser souhaité (repère 27 figures 1 à 4), et le cas échéant des données de choix d'une configuration de trajectoire de survol parmi celles enregistrées dans la mémoire 26.

Le FMS gère les informations relatives à la position courante de l'aéronef, les trajectoires à suivre pour « cartographier » les obstacles autour de la zone de poser, le plan de vol généré ainsi que la zone de poser. Il reçoit les informations issues des instruments 21, 22 et calcule la position de l'aéronef, les angles d'attitude et de cap ainsi qu'une vitesse de l'aéronef, de façon précise.

Un télémètre laser 28 embarqué émet un faisceau 36 et reçoit les échos 37 correspondants qui sont renvoyés par le terrain 29 et les obstacles 30. Les données de mesure télémétriques ou « plots », qui correspondent aux coordonnées d'un point d'un obstacle ou du terrain dans un repère lié à l'aéronef portant le télémètre, sont délivrées par le télémètre à une unité ou module 31 d'analyse pour la détection d'obstacles tels que des câbles aériens, et l'enregistrement des données analysées.

L'OWS délivre des données de « plots bruts » associées à des informations de datation et de vitesse. Ces plots sont ensuite redressés dans un repère lié au sol et analysés pour en extraire les câbles et autres obstacles détectés.

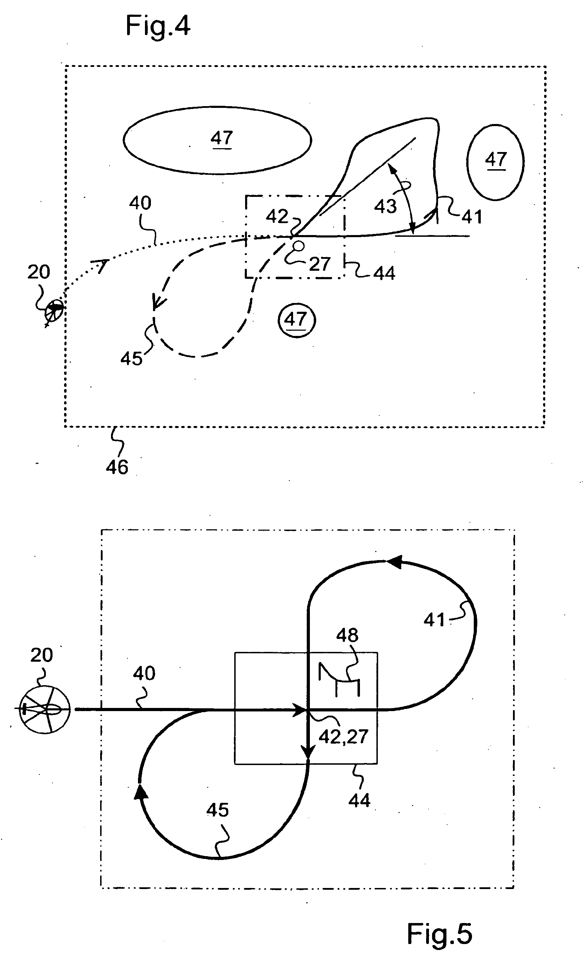

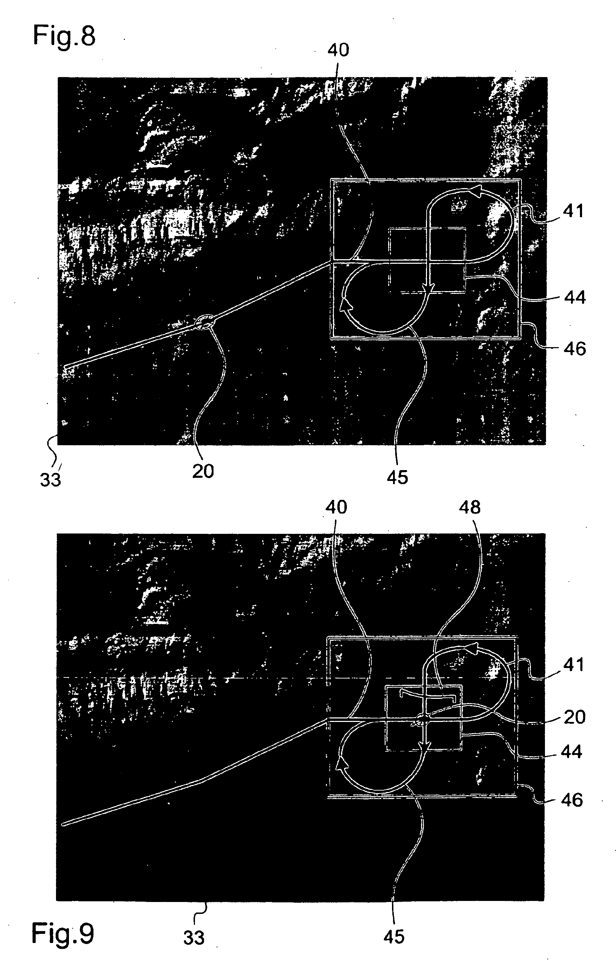

Un module 32 reçoit du calculateur 23 les données enregistrées dans la base 25 et compare ces données à celles résultant de l'analyse des données télémétriques par le module 31 ; le module 32 localise ainsi des obstacles détectés non répertoriés dans la base, et délivre les données correspondantes à un module 33 d'affichage sur un fond de carte des obstacles détectés non répertoriés, comme illustré schématiquement figure 5 et 9 notamment.

Le calculateur 32 fournit par défaut le visuel cartographique pour le pilote en rapport avec la position présente de l'hélicoptère. Le calculateur 32 localise en outre, à partir des données issues de l'OWS et du FMS, la position précise des obstacles détectés et gère les informations de l'affichage cartographique. Ainsi à partir des données reçues pour les câbles (hauteur, dimension, position, etc...) des symboles représentatifs des obstacles détectés sont affichés.

Le calculateur 23 comporte par ailleurs un module de recherche des interférences éventuelles entre une trajectoire de survol candidate et les données enregistrées dans la base 25. Lorsque aucune interférence n'est détectée par ce module, le calculateur 23 peut délivrer au pilote automatique 34 des données permettant à celui-ci de commander les actionneurs 35 de l'aéronef - en particulier de commander des variations de pas cyclique et de pas collectif des pales d'un rotor de sustentation et d'avance dans le cas d'un giravion - afin que l'aéronef suive cette trajectoire de survol.

Les données délivrées par le télémètre (OWS) couplé aux instruments de navigation peuvent être analysées par un procédé de détection/localisation de câbles utilisant une transformée de Hough ou de Radon.

Dans les modes de réalisation illustrés figures 1 à 4 notamment, après avoir choisi un point de poser candidat 27, l'hélicoptère 20 suit une trajectoire 40 pour atteindre sensiblement la verticale de ce point, à une altitude déterminée.

Les calculateurs 23 et 34 commandent alors les organes 35 pour que l'aéronef suive une trajectoire 41 de survol en forme de boucle présentant un point 42 anguleux dont une projection dans un plan horizontal contenant le point de poser est sensiblement confondue avec ce point de poser 27. Dans le cas de la figure 2, la trajectoire de survol comporte deux boucles anguleuses successives 41 et 410.

En suivant cette trajectoire 41, l'aéronef effectue un premier passage à la verticale du point de poser (estimé) à une altitude et avec une vitesse déterminées, puis un second passage à la verticale du même point, l'angle 43 formé (dans le plan des figures 1 à 5, 8 et 9) par les segments correspondants de cette trajectoire étant voisin de 90 degrés dans le cas correspondant aux figures 1 à 3, 5, 8 et 9, ou bien voisin de 45 degrés environ dans le cas correspondant à la figure 4.

Suite à ce survol, l'aéronef suit une trajectoire d'atterrissage 45 jusqu'au point de poser, dont la projection dans un plan horizontal est également en forme de boucle présentant un point anguleux.

La position courante de l'hélicoptère est fournie par les équipements 21, 22 de navigation avec le plus de précision possible afin de pouvoir localiser précisément les câbles et autres obstacles dans un espace 44 entourant le point de poser.

Les obstacles détectés grâce à l'OWS 28 sont localisés et dimensionnés avec des informations permettant de les définir (altitude des sommets de pylônes, position des points d'attache de câbles suspendus, taille, etc.), puis affichés sur un fond de carte incluant le voisinage 44 du point de poser ainsi que la position courante de l'hélicoptère 20.

L'invention permet notamment de remédier à la diminution de la portée de détection d'un câble par un télémètre laser, en fonction de l'angle d'incidence du faisceau laser sur le câble.

La portée maximale *d* de détection d'un câble de 6mm de diamètre, avec un probabilité de détection Pd de 99.5 %, en fonction de l'angle θ d'incidence s'approxime par la formule : *d* = *f*(θ) = *p*ₘₐₓsin²(*θ*), où pₘₐₓ représente la portée maximale du télémètre avec une probabilité Pd donnée.

La courbe 50 du diagramme de la figure 6 illustre les variations des performances d'un OWS laser, pour un câble de 6 millimètres en aluminium, visible au moins sous une ouverture α = 5 ° par temps clair ou pluie fine, pour une incidence allant de zéro à 350 degrés. On voit que la portée atteint 500 mètres pour une incidence de 90 degrés, est nulle pour une incidence de zéro degré, et est de l'ordre de 200 mètres pour une incidence de 40 degrés.

Par temps de brume, la portée maximale est encore réduite de 10 à 15 %. La probabilité Pd est une probabilité de détection d'un obstacle par seconde. La durée de détection lors d'un passage est donnée par la formule *t=d*/*v*, où v représente la vitesse de l'aéronef.

La probabilité de non détection Pnd est donnée par *P_{nd}* = (1- *P_{d})^{t}* = (1-*P_{d}*)^{[*f*(*θ*)/*ν*]}

En effectuant autour d'une aire de poser deux passages à 90 degrés, la probabilité de non détection devient : *P_{nd} =* (1 *- P_{d}*)^{[*f*(θ)*+f*(90°-θ)]/ν}

Avec la fonction ^{*f*(θ)= *p*ₘₐₓsin2(θ)}, on obtient :^{*Pnd=* (1- *Pd*)p_{max/ν}}

Ainsi, avec deux survols à 90 degrés, la probabilité de non détection d'un câble ne dépend pas de l'angle d'incidence de la trajectoire d'approche ou de décollage choisie.

Avec des passages effectués à une vitesse autour de 40 noeuds, on obtient une probabilité de non détection de 2.44 10⁻²⁸ ; le problème de sécurisation du système ne dépend plus que du bon fonctionnement de ses différents composants.

Afin de sécuriser la zone 44 de poser sans prendre de risque ni rendre inopérant l'OWS, une hauteur de survol de l'ordre de 100 à 300 mètres est préférable.

Par conséquent, une trajectoire de survol optimale de ce point de vue comporte deux passages verticaux perpendiculaires au dessus du point de poser. Cette trajectoire présente l'avantage de permettre à l'aéronef de se poser dans un axe d'approche déjà repéré.

Sur certains FMS, des figures de survol programmées pour des missions SAR de sauvetage et recherche (« Search And Rescue ») peuvent être utilisées en l'état ou bien adaptées pour effectuer deux passages en survol de la zone de poser avec des angles de cap différents.

Selon un mode de réalisation, lorsque le point de poser est prédéterminé, le pilote peut programmer sur le FMS le point de poser à la fin de son plan de vol (repéré en latitude et longitude ou bien autrement) le plus précisément possible.

Le FMS génère les trajectoires 40, 41, 410, et le cas échéant 45 que devra suivre l'aéronef. A partir des données de terrain contenues dans la base 25, si le pilote n'a pas rentré d'altitude « valide », le calculateur 23, 32 calcule la hauteur sécurisée minimale à laquelle l'hélicoptère pourra effectuer le survol de la zone 46 incluant ces trajectoires. Dans le cas où la figure 41 de survol prolongeant le leg 40 interfère avec le relief (repères 47 figures 1 à 4), le calculateur 23, 32 recalcule une autre figure de survol candidate en effectuant des transformations de la figure interférente (par rotation ou autre), jusqu'à trouver une trajectoire de survol « sécurisée ».

Lorsque le point de poser n'est pas prédéterminé, le pilote peut effectuer un premier passage à une altitude sécurisée pour localiser le point de poser qu'il rentre alors dans le FMS (en bout de leg ou autrement). Une fois le point de poser entré, la procédure de choix de la trajectoire de survol et le cas échéant de la trajectoire d'atterrissage, est effectuée de la même manière que décrit ci avant.

Après le poser, le système peut afficher (figures 5, 9) sur le dispositif 33 des symboles représentatifs de la présence d'obstacles 48 détectés autour du point de poser dans la zone sécurisée 44.

Dans le cas où aucune trajectoire de survol candidate optimale ne peut être trouvée à cause du relief dans la région 46 entourant la région 44, le système peut i) soit afficher au pilote qu'on ne peut pas sécuriser la zone de poser, ii) soit programmer une boucle de survol sécurisée n'interférant pas avec le relief mais n'optimisant pas la détection de câbles, et indiquer par un symbole graphique ou une couleur que la probabilité de détection de câbles n'est pas maximale ; en fonction de la valeur de l'angle 43 utilisé, le système peut informer le pilote que la détection des câbles n'est pas assurée au minimum réglementaire mais à un pourcentage plus faible.

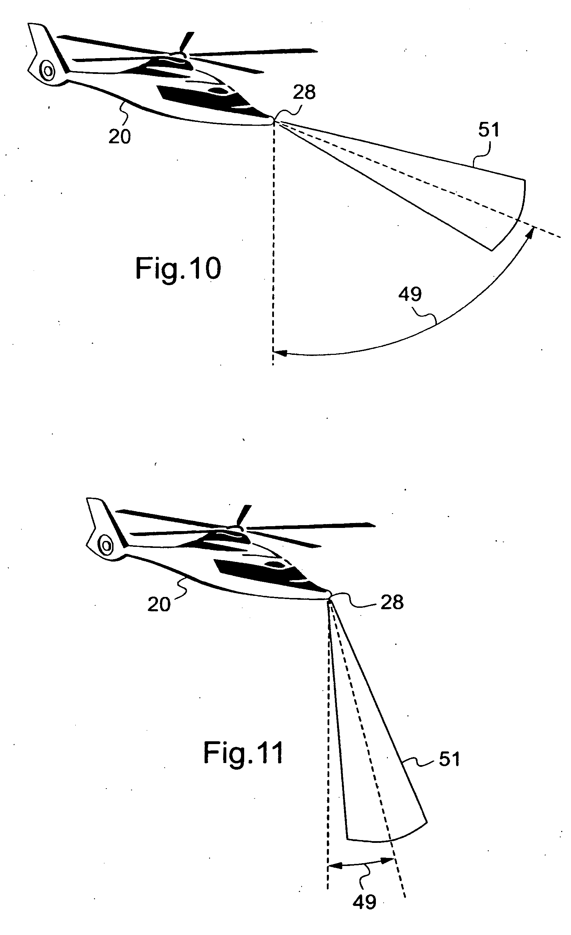

Pour la procédure de survol de la zone de poser, on peut diminuer (figure 11) l'orientation verticale 49 (figures 10, 11) du faisceau 51 du télémètre afin d'améliorer la probabilité de détection. Cela permet également au pilote de voler à une altitude supérieure (donc plus sûre) tout en gardant les mêmes performances pour le système.

L'invention permet de détecter des câbles de nuit de façon plus fiable et précise. Le pilote peut alors préparer un décollage et un plan de vol avec plus de sérénité. L'invention fait gagner du temps pour l'exécution de missions telles que les évacuations sanitaires ou les transports de troupes en zone de conflit ; quelques minutes peuvent suffire pour détecter et localiser des obstacles de façon fiable dans une zone d'une surface de l'ordre de 10000 mètre carré entourant le point de poser.

## Revendications

1. Procédé de détection d'obstacles (48) à bord d'un aéronef au voisinage (44) d'un point de poser (27, 42),
**caractérisé en ce qu'**il comporte les opérations suivantes :
- déterminer une trajectoire (41) de survol du point de poser par l'aéronef, une projection horizontale de la trajectoire de survol comportant deux arcs ou segments se croisant en un point d'intersection (42) proche du point de poser (27),
- effectuer un survol du point de poser par l'aéronef selon la trajectoire de survol de sorte que l'aéronef effectue successivement deux survols du point de poser selon deux caps différents, et enregistrer pendant le survol des signaux/données délivrées par un télémètre (28) embarqué observant une portion d'espace s'étendant sous l'aéronef,
- analyser les données télémétriques pour détecter la présence d'obstacles et déterminer leur position dans un repère terrestre et le cas échéant leurs dimensions, et
- enregistrer des données de position et le cas échéant de dimension des obstacles détectés dans une mémoire,
et **en ce que** la valeur de l'angle (43) formé par les arcs ou segments au point d'intersection est située dans une plage allant d'environ 40 degrés à environ 140 degrés.

2. Procédé selon la revendication 1, dans lequel l'aéronef effectue seulement deux survols du point de poser.

3. Procédé selon la revendication 1 ou 2, dans lequel la valeur de l'angle est située dans une plage allant d'environ 75 degrés à environ 105 degrés, en particulier voisine ou sensiblement égale à 90 degrés.

4. Procédé selon l'une quelconque des revendications 1 à 3, dans lequel une projection horizontale de la trajectoire de survol comporte une boucle (41, 410) fermée présentant un point anguleux (42) -ou sommet-voisin du point de poser (27) et correspondant au point d'intersection, laquelle boucle inclut les arcs ou segments.

5. Procédé selon l'une quelconque des revendications 1 à 4, dans lequel on maintient l'altitude de l'aéronef sensiblement constante pendant le survol selon les arcs/segments ou la boucle.

6. Procédé selon l'une quelconque des revendications 1 à 5 dans lequel, pendant une partie au moins de la trajectoire de survol, on maintient l'altitude de l'aéronef à une valeur voisine de -ou inférieure à-300 mètres environ, en partie voisine de -ou inférieure à- 100 ou 200 mètres environ.

7. Procédé selon l'une quelconque des revendications 1 à 6 dans lequel, pendant une partie au moins de la trajectoire de survol, on maintient la vitesse de l'aéronef à une valeur de l'ordre de 10 mètres par seconde environ à 50 mètres par seconde environ.

8. Procédé selon l'une quelconque des revendications 1 à 7, dans lequel on utilise un télémètre dont l'axe de visée forme avec la verticale un angle (49) situé dans une plage allant de zéro degrés environ à 45 degrés environ.

9. Procédé selon l'une quelconque des revendications 1 à 8, dans lequel on utilise un télémètre laser à balayage pour détecter les obstacles.

10. Procédé selon l'une quelconque des revendications 1 à 9, dans lequel on utilise un télémètre présentant un axe de visée dont l'orientation est réglable.

11. Procédé selon l'une quelconque des revendications 1 à 10, dans lequel on utilise une transformée de Hough ou de Radon pour analyser les données télémétriques, afin d'améliorer la détection d'objets filiformes tels que fils, câbles, mats ou poteaux.

12. Procédé selon l'une quelconque des revendications 1 à 11 dans lequel on affiche sur un dispositif d'affichage (33), un premier symbole représentatif du point (de poser) ainsi qu'un second symbole représentatif d'un obstacle détecté ne faisant pas partie de la base de données, et de préférence des données cartographiques relatives à une région entourant le point de poser.

13. Procédé selon l'une quelconque des revendications 1 à 12 dans lequel on délivre des signaux de commande d'organes (35) de manoeuvre de l'aéronef pour lui faire suivre la trajectoire de survol.

14. Procédé de pilotage d'un aéronef au voisinage d'un point de poser (27), **caractérisé en ce que :**
- on acquiert à bord de l'aéronef des données de mesure télémétrique d'une région terrestre entourant le point de poser, pendant un survol de cette région par l'aéronef, selon une trajectoire (41) de survol dont une projection horizontale comporte deux arcs ou segments se croisant en un point d'intersection (42) proche du point de poser (27) et formant un angle (43) dont la valeur est située dans une plage allant d'environ 40 degrés à environ 140 degrés,
- on analyse ces données à bord de l'aéronef pour identifier, positionner et dimensionner des reliefs ou obstacles,
- on enregistre des données relatives aux positions et dimensions des obstacles détectés par télémétrie et,
- après atterrissage au voisinage du point de poser, on utilise ces données enregistrées pour déterminer une trajectoire d'envol.

15. Procédé de pilotage d'un aéronef au voisinage d'un point de poser (27), **caractérisé en ce que :**
i) - on choisit une trajectoire candidate dont une projection horizontale comporte une boucle fermée (41, 410) présentant un point anguleux - ou sommet - voisin du point de poser, la boucle comportant deux arcs ou segments formant un angle (43) dont la valeur est située dans une plage allant d'environ 40 degrés à environ 140 degrés;
ii) - on associe à la trajectoire candidate une altitude de sécurité;
iii) - on compare des données relatives au relief du terrain et d'obstacles au voisinage du point de poser qui sont enregistrées dans une mémoire (25) embarquée, à la trajectoire candidate associée à l'altitude de sécurité, pour détecter une éventuelle interférence entre le relief et la trajectoire candidate;
iv) - dans le cas où une telle interférence est détectée, on modifie la trajectoire candidate et/ou l'altitude de sécurité, puis on répète l'opération iii) de comparaison ; et
v) - dans le cas où aucune interférence n'est détectée, on détecte des obstacles par un procédé selon l'une quelconque des revendications 1 à 14, en choisissant la trajectoire candidate comme trajectoire de survol.

16. Procédé selon la revendication 15 dans lequel, pour modifier la trajectoire candidate, on effectue au moins une des opérations suivantes :
- augmenter ou diminuer la valeur de l'angle (43) au sommet de la boucle,
- modifier la direction de la bissectrice de l'angle au sommet,
- augmenter ou diminuer la valeur du rayon/envergure de la boucle,
- déplacer la trajectoire candidate par une rotation centrée sur un point voisin du point de poser.

17. Système d'aide à l'atterrissage et au décollage d'un aéronef en un point de poser **caractérisé en ce qu'**il comporte :
- un afficheur (33) embarqué pour afficher des données cartographiques et des symboles représentatifs d'obstacles,
- une base de données embarquée (25) contenant des données de terrain ou d'obstacles,
- un instrument embarqué de positionnement (21, 22) pour déterminer la position courante de l'aéronef,
- une mémoire embarquée (31, 32) pour enregistrer des données de terrain ou d'obstacles complétant les données de la base de données,
- un télémètre embarqué (28) pour acquérir des données de terrain ou d'obstacles,
- un calculateur (23, 31, 32) relié à l'afficheur, à la base de données, à l'instrument de positionnement, au télémètre et à la mémoire, le calculateur étant arrangé/programmé pour commander le survol du point de poser selon une trajectoire (41) de survol dont une projection horizontale comporte deux arcs ou segments se croisant en un point d'intersection (42) proche du point de poser (27) et formant un angle (43) dont la valeur est située dans une plage allant d'environ 40 degrés à environ 140 degrés, analyser les données délivrées par le télémètre et enregistrer les données analysées dans la mémoire, et afficher des données extraites de la base de données et au moins un symbole représentatif d'un obstacle détecté par analyse des données télémétriques.

18. Programme fixé sur un support lisible par un calculateur d'un aéronef pour détecter des obstacles au voisinage (44) d'un point de poser (27, 42), **caractérisé en ce qu'**il comporte:
- un segment de code pour déterminer une trajectoire (41) de survol du point de poser par l'aéronef, une projection horizontale de la trajectoire de survol comportant deux arcs ou segments se croisant en un point d'intersection (42) proche du point de poser (27) et formant un angle (43) dont la valeur est située dans une plage allant d'environ 40 degrés à environ 140 degrés,
- un segment de code pour enregistrer pendant le survols des signaux/données délivrées par un télémètre (28) embarqué observant une portion du voisinage (44) du point de poser,
- un segment de code pour analyser les données télémétriques, détecter la présence d'obstacles et déterminer leur position dans un repère terrestre et le cas échéant leurs dimensions, et
- un segment de code pour enregistrer des données de position et le cas échéant de dimension des obstacles détectés dans une mémoire.

## Claims

1. A method of detecting, from on board an aircraft, obstacles (48) in the vicinity (44) of a landing point (27, 42),
**characterised in that** it includes the following operations:
- determining a trajectory (41) along which the aircraft overflies the landing point, in which a horizontal projection of the trajectory of overflight includes two arcs or segments which cross at a point of intersection (42) close to the landing point (27),
- flying the aircraft over the landing point, along the trajectory of overflight, such that the aircraft performs two successive overflights of the landing point with two different headings, and during the overflight recording signals/data supplied by an onboard range finder (28) which observes a portion of the space below the aircraft,
- analysing the range data to detect the presence of obstacles, and determining their position in relation to a chart of the terrain and, if appropriate, their dimensions, and
- recording in a memory the position data and, where appropriate, dimension data of the detected obstacles,
and **in that** the value of the angle (43) formed by the arcs or segments at the point of intersection is in a range extending from approximately 40 degrees to approximately 140 degrees.

2. A method according to Claim 1, in which the aircraft performs only two overflights of the landing point.

3. A method according to Claim 1 or 2, in which the value of the angle is in a range extending from approximately 75 degrees to approximately 105 degrees, in particular being close to or approximately equal to 90 degrees.

4. A method according to any one of Claims 1 to 3, in which a horizontal projection of the trajectory of overflight includes a closed loop (41, 410) having a sharp-angled point (42) - or apex - close to the landing point (27) and corresponding to the point of intersection, in which this loop includes the arcs or segments.

5. A method according to any one of Claims 1 to 4, in which the altitude of the aircraft is kept substantially constant during the overflight along the arcs/segments or the loop.

6. A method according to any one of Claims 1 to 5, in which, during at least part of the trajectory of overflight, the altitude of the aircraft is kept at a value close to - or less than - approximately 300 metres, and partly close to - or less than - approximately 100 or 200 metres.

7. A method according to any one of Claims 1 to 6, in which, during at least part of the trajectory of overflight, the speed of the aircraft is kept at a value in the order of approximately 10 metres per second to approximately 50 metres per second.

8. A method according to any one of Claims 1 to 7, in which a range finder is used whereof the axis of sight forms an angle (49) with the vertical which is in a range extending from approximately zero degrees to approximately 45 degrees.

9. A method according to any one of Claims 1 to 8, in which a scanning laser range finder is used to detect obstacles.

10. A method according to any one of Claims 1 to 9, in which a range finder is used whereof the orientation of an axis of sight is adjustable.

11. A method according to any one of Claims 1 to 10, in which a Hough or Radon transform is used to analyse the range data, in order to improve the detection of line-shaped objects such as wires, cables, masts or posts.

12. A method according to any one of Claims 1 to 11, in which a first symbol representing the (landing) point and a second symbol representing a detected obstacle and not forming part of the database, and preferably cartographic data relating to a region around the landing point, are displayed on a display means (33).

13. A method according to any one of Claims 1 to 12, in which signals from control members (35) for manoeuvring the aircraft are supplied so that it follows the trajectory of overflight.

14. A method of piloting an aircraft in the vicinity of a landing point (27),
**characterised in that:**
- data from a range finding measurement of a terrestrial region around the landing point are acquired on board the aircraft, while the aircraft flies over this region along a trajectory (41) of overflight whereof a horizontal projection includes two arcs or segments which cross at a point of intersection (42) close to the landing point (27) and form an angle (43) having a value in a range extending from approximately 40 degrees to approximately 140 degrees,
- these data are analysed on board the aircraft to identify and establish the location and dimensions of reliefs or obstacles,
- the data relating to the positions and dimensions of the obstacles detected by range finding are recorded, and
- after landing in the vicinity of the landing point, these recorded data are used to determine a trajectory for take-off.

15. A method of piloting an aircraft in the vicinity of a landing point (27), **characterised in that:**
i) a possible trajectory is chosen, whereof a horizontal projection includes a closed loop (41, 410) having a sharp-angled point - or apex - close to the landing point, in which the loop includes two arcs or segments forming an angle (43) whereof the value is in a range extending from approximately 40 degrees to approximately 140 degrees;
ii) an association between a safe altitude and the possible trajectory is established;
iii) the data relating to the relief of the terrain and obstacles in the vicinity of the landing point which are recorded in an onboard memory (25) are compared with the possible trajectory associated with the safe altitude in order to detect any conflict between the relief and the possible trajectory;
iv) should such a conflict be detected, the possible trajectory and/or the safe altitude are modified and then the comparison operation iii) is repeated; and
v) should no conflict be detected, then obstacles are detected by a method according to any one of Claims 1 to 14, by choosing the possible trajectory as the trajectory of overflight.

16. A method according to Claim 15, in which, in order to modify the possible trajectory, at least one of the following operations is carried out:
- the value of the angle (43) at the apex of the loop is increased or decreased,
- the direction of the line bisecting the angle at the apex is modified,
- the value of the radius/span of the loop is increased or decreased,
- the possible trajectory is displaced by a rotation centred on a point close to the landing point.

17. A system for aiding the landing and take-off of an aircraft at a landing point, **characterised in that** it includes:
- an onboard display (33) for displaying cartographic data and symbols representing obstacles,
- an onboard database (25) containing terrain or obstacle data,
- an onboard locating instrument (21, 22) for determining the current position of the aircraft,
- an onboard memory (31, 32) for recording data on the terrain or obstacles, supplementing the data in the database,
- an onboard range finder (28) for acquiring data on the terrain or obstacles,
- a computer (23, 31, 32) which is connected to the display, the database, the locating instrument, the range finder and the memory, in which the computer is set up/programmed to control overflight of the landing point along a trajectory (41) of overflight whereof a horizontal projection includes two arcs or segments which cross at a point of intersection (42) close to the landing point (27) and form an angle (43) having a value in a range extending from approximately 40 degrees to approximately 140 degrees, to analyse the data supplied by the range finder and to record the analysed data in the memory, and to display the data extracted from the database and at least one symbol representing an obstacle that has been detected by analysing the range data.

18. A program stored on a carrier and readable by a computer of an aircraft, for detecting obstacles in the vicinity (44) of a landing point (27, 42), **characterised in that** it includes:
- a segment of code for determining a trajectory (41) along which the aircraft overflies the landing point, in which a horizontal projection of the trajectory of overflight includes two arcs or segments which cross at a point of intersection (42) close to the landing point (27) and form an angle (43) whereof the value is in a range extending from approximately 40 degrees to approximately 140 degrees,
- a segment of code for recording, during the overflight, signals/data supplied by an onboard range finder (28) which observes a portion of the vicinity (44) of the landing point,
- a segment of code for analysing the range data, for detecting the presence of obstacles, and for determining their position in relation to a chart of the terrain and, if appropriate, their dimensions, and
- a segment of code for recording in a memory the position data and, where appropriate, dimension data of the detected obstacles.

## Patentansprüche

1. Verfahren zur Erfassung von Hindernissen (48) an Bord eines Luftfahrzeugs in der Nähe (44) eines Landepunkts (27, 42), **dadurch gekennzeichnet, dass** es die folgenden Arbeitsvorgänge aufweist:
- Bestimmen einer Flugbahn (41) zum Überfliegen des Landepunkts durch das Luftfahrzeug, wobei eine horizontale Projektion der Überflugbahn zwei Bögen oder Segmente aufweist, die sich in einem Schnittpunkt (42) nahe dem Landepunkt (27) kreuzen,
- Durchführen eines Überflugs des Landepunkts durch das Luftfahrzeug gemäß der Überflugbahn derart, dass das Luftfahrzeug nacheinander zwei Überflüge des Landepunkts gemäß zwei unterschiedlichen Steuerkursen durchführt, und Speichern während des Überflugs der Signale/Daten, die von einem an Bord befindlichen Telemeter (28) geliefert werden, das einen Raumabschnitt beobachtet, der sich unter dem Luftfahrzeug erstreckt,
- Analyse der telemetrischen Daten, um das Vorhandensein von Hindernissen zu erfassen und ihre Position in einem terrestrischen Bezugssystem und ggf. ihre Abmessungen zu bestimmen, und
- Speichern der Positionsdaten und ggf. der Abmessungsdaten der erfassten Hindernisse in einem Speicher,
und dass der Wert des von den Bögen oder Segmenten am Schnittpunkt gebildeten Winkels (43) sich in einem Bereich befindet, der von etwa 40 Grad bis etwa 140 Grad geht.

2. Verfahren nach Anspruch 1, bei dem das Luftfahrzeug nur zwei Überflüge des Landepunkts durchführt.

3. Verfahren nach Anspruch 1 oder 2, bei dem der Wert des Winkels sich in einem Bereich befindet, der von etwa 75 Grad bis etwa 105 Grad geht, insbesondere nahe oder im Wesentlichen gleich 90 Grad ist.

4. Verfahren nach einem der Ansprüche 1 bis 3, bei dem eine horizontale Projektion der Überflugbahn eine geschlossene Schleife (41, 410) aufweist, die einen Winkelpunkt (42) - oder Scheitel - hat, der dem Landepunkt (27) benachbart ist und dem Schnittpunkt entspricht, wobei die Schleife die Bögen oder Segmente umfasst.

5. Verfahren nach einem der Ansprüche 1 bis 4, bei dem die Höhe des Luftfahrzeugs während des Überflugs gemäß den Bögen/ Segmenten oder der Schleife im Wesentlichen konstant gehalten wird.

6. Verfahren nach einem der Ansprüche 1 bis 5, bei dem zumindest während eines Teils der Überflugbahn die Höhe des Luftfahrzeugs auf einem Wert nahe - oder geringer als - etwa 300 Meter, zum Teil nahe - oder geringer als - etwa 100 oder 200 Meter gehalten wird.

7. Verfahren nach einem der Ansprüche 1 bis 6, bei dem zumindest während eines Teils der Überflugbahn die Geschwindigkeit des Luftfahrzeugs auf einem Wert in der Größenordnung von etwa 10 Meter pro Sekunde bis etwa 50 Meter pro Sekunde gehalten wird.

8. Verfahren nach einem der Ansprüche 1 bis 7, bei dem ein Telemeter verwendet wird, dessen Visierlinie mit der Senkrechten einen Winkel (49) bildet, der sich in einem Bereich befindet, der von etwa Null Grad bis etwa 45 Grad geht.

9. Verfahren nach einem der Ansprüche 1 bis 8, bei dem ein Laserscanner-Telemeter verwendet wird, um die Hindernisse zu erfassen.

10. Verfahren nach einem der Ansprüche 1 bis 9, bei dem ein Telemeter mit einer Visierlinie verwendet wird, deren Ausrichtung einstellbar ist.

11. Verfahren nach einem der Ansprüche 1 bis 10, bei dem eine Hough- oder Radon-Transformation zur Analyse der telemetrischen Daten verwendet wird, um die Erfassung von dünnen Gegenständen wie Drähte, Kabel, Masten oder Pfeiler zu verbessern.

12. Verfahren nach einem der Ansprüche 1 bis 11, bei dem auf einer Anzeigevorrichtung (33) ein erstes Symbol, das für den (Lande)-Punkt repräsentativ ist, sowie ein zweites Symbol, das für ein erfasstes Hindernis repräsentativ ist, das nicht Teil der Datenbank ist, und vorzugsweise kartographische Daten bezüglich eines Gebiets angezeigt werden, das den Landepunkt umgibt.

13. Verfahren nach einem der Ansprüche 1 bis 12, bei dem Steuersignale von Manövrierorganen (35) des Luftfahrzeugs geliefert werden, damit es der Überflugbahn folgt.

14. Verfahren zum Steuern eines Luftfahrzeugs in der Nähe eines Landepunkts (27), **dadurch gekennzeichnet, dass:**
- an Bord des Luftfahrzeugs telemetrische Messdaten eines den Landepunkt umgebenden terrestrischen Gebiets während eines Überflugs dieses Gebiets durch das Luftfahrzeug gemäß einer Überflugbahn (41) erfasst werden, deren horizontale Projektion zwei Bögen oder Segmente aufweist, die sich in einem Schnittpunkt (42) nahe dem Landepunkt (27) kreuzen und einen Winkel (43) bilden, dessen Wert sich in einem Bereich befindet, der von etwa 40 Grad bis etwa 140 Grad geht,
- diese Daten an Bord des Luftfahrzeugs analysiert werden, um Reliefs oder Hindernisse zu identifizieren, zu positionieren und abzumessen,
- Daten bezüglich der Positionen und Abmessungen der durch Telemetrie erfassten Hindernisse gespeichert werden, und
- nach der Landung in der Nähe des Landepunkts diese gespeicherten Daten verwendet werden, um eine Abflugbahn zu bestimmen.

15. Verfahren zur Steuerung eines Luftfahrzeugs in der Nähe eines Landepunkts (27), **dadurch gekennzeichnet, dass:**
i) - eine Kandidat-Flugbahn gewählt wird, deren horizontale Projektion eine geschlossene Schleife (41, 410) aufweist, die einen Winkelpunkt - oder Scheitel - nahe dem Landepunkt hat, wobei die Schleife zwei Bögen oder Segmente aufweist, die einen Winkel (43) bilden, dessen Wert sich in einem Bereich befindet, der von etwa 40 Grad bis etwa 140 Grad geht;
ii) - der Kandidat-Flugbahn eine Sicherheitsflughöhe zugeordnet wird,
iii) Daten bezüglich des Reliefs des Geländes und von Hindernissen in der Nähe des Landepunkts, die in einem an Bord befindlichen Speicher (25) gespeichert sind, mit der der Sicherheitsflughöhe zugeordneten Kandidat-Flugbahn verglichen werden, um eine mögliche Interferenz zwischen dem Relief und der Kandidat-Flugbahn zu erfassen;
iv) - wenn eine solche Interferenz erfasst wird, die Kandidat-Flugbahn und/oder die Sicherheitsflughöhe verändert werden, dann der Vergleichsvorgang iii) wiederholt wird; und
v) - wenn keine Interferenz erfasst wird, Hindernisse durch ein Verfahren nach einem der Ansprüche 1 bis 14 erfasst werden, indem die Kandidat-Flugbahn als Überflugbahn gewählt wird.

16. Verfahren nach Anspruch 15, bei dem, um die Kandidat-Flugbahn zu verändern, mindestens einer der folgenden Arbeitsvorgänge durchgeführt wird:
- Erhöhen oder Verringern des Werts des Winkels (43) am Scheitel der Schleife,
- Verändern der Richtung der Winkelhalbierenden des Scheitelwinkels,
- Erhöhen oder Verringern des Werts des Radius/der Spannweite der Schleife,
- Verschieben der Kandidat-Flugbahn durch eine auf einen Punkt nahe dem Landepunkt zentrierte Drehung.

17. Lande- und Abflughilfssystem eines Luftfahrzeugs an einem Landepunkt, **dadurch gekennzeichnet, dass** es aufweist:
- ein an Bord befindliches Display (33), um kartographische Daten und für Hindernisse repräsentative Symbole anzuzeigen,
- eine an Bord befindliche Datenbank (25), die Gelände- oder Hindernisdaten enthält,
- ein an Bord befindliches Positionierungsinstrument (21, 22), um die laufende Position des Luftfahrzeugs zu bestimmen,
- einen an Bord befindlichen Speicher (31, 32), um Gelände- oder Hindernisdaten zu speichern, die die Daten der Datenbank vervollständigen,
- ein an Bord befindliches Telemeter (28), um Gelände- oder Hindernisdaten zu erfassen,
- einen mit dem Display, der Datenbank, dem Positionierungsinstrument, dem Telemeter und dem Speicher verbundener Rechner (23, 31, 32), wobei der Rechner eingerichtet/programmiert ist, um das Überfliegen des Landepunkts gemäß einer Überflugbahn (41) zu steuern, deren horizontale Projektion zwei Bögen oder Segmente aufweist, die sich in einem Schnittpunkt (42) nahe dem Landepunkt (27) kreuzen und einen Winkel (43) bilden, dessen Wert sich in einem Bereich befindet, der von etwa 40 Grad bis etwa 140 Grad geht, um die vom Telemeter gelieferten Daten zu analysieren und die analysierten Daten im Speicher zu speichern, und um aus der Datenbank entnommene Daten und mindestens ein Symbol anzuzeigen, das für ein Hindernis repräsentativ ist, das durch Analyse der telemetrischen Daten erfasst wurde.

18. Programm, das auf einem von einem Rechner eines Luftfahrzeugs lesbaren Träger fixiert ist, um Hindernisse in der Nähe (44) eines Landepunkts (27, 42) zu erfassen, **dadurch gekennzeichnet, dass** es aufweist:
- ein Codesegment, um eine Überflugbahn (41) des Landepunkts durch das Luftfahrzeug zu bestimmen, wobei eine horizontale Projektion der Überflugbahn zwei Bögen oder Segmente aufweist, die sich in einem Schnittpunkt (42) nahe dem Landepunkt (27) kreuzen und einen Winkel (43) bilden, dessen Wert sich in einem Bereich befindet, der von etwa 40 Grad bis etwa 140 Grad geht,
- ein Codesegment, um während des Überflugs Signale/Daten zu speichern, die von einem an Bord befindlichen Telemeter (28) geliefert werden, das einen Abschnitt der Umgebung (44) des Landepunkts beobachtet,
- ein Codesegment, um die telemetrischen Daten zu analysieren, das Vorhandensein von Hindernissen zu erfassen und ihre Position in einem terrestrischen Bezugssystem und ggf. ihre Abmessungen zu bestimmen, und
- ein Codesegment, um Positionsdaten und ggf. Abmessungsdaten der erfassten Hindernisse in einem Speicher zu speichern.
